# EUROPÄISCHE PATENTSCHRIFT

(11) **EP 0 834 389 B1**
(45) Veröffentlichungstag und Bekanntmachung des Hinweises auf die Patenterteilung: **25.04.2001**
(21) Anmeldenummer: 97115498.4
(22) Anmeldetag: 08.09.1997
(51) Int. Cl.: B29C 53/46, B29C 53/04, B29C 65/20

(54) **Schweiss-und Biegevorrichtung zur Herstellung von Rohrköpern**
Welding and bending apparatus for producing tubular articles
Appareil de soudage et cintrage pour la fabrication de corps tubulaires

(30) Priorität: 02.10.1996 DE 29617164 U
(43) Veröffentlichungstag der Anmeldung: 08.04.1998
(73) Patentinhaber: WEGENER GmbH, D-52074 Aachen (DE)
(72) Erfinder: Weissfloch, Reiner, Dr., 52223 Stolberg (DE)
(74) Vertreter: Paul, Dieter-Alfred, Dipl.-Ing.

(56) Entgegenhaltungen:
- EP-A- 0 425 724
- DE-A- 3 637 436
- US-A- 5 275 674

## Beschreibung

Die Erfindung betrifft eine Schweiß- und Biegevorrichtung zur Herstellung von Rohrkörpern aus Kunststoffplatten mit zwei benachbarten, eine Spannebene definierenden Spanneinrichtung zum Fixieren einer rundgebogenen Kunststoffplatte in Bereichen, die den zu verschweißenden Stirnseiten benachbart sind, sowie mit einer Schweißeinrichtung.

Kunststoffplatten können stirnseitig mit Hilfe von Schweißvorrichtungen miteinander verbunden werden, wie sie beispielsweise aus der DE-A-35 39 842 und EP-A-0 595 213 bekannt sind. Solche Schweißvorrichtungen weisen einen langgestreckten Grundkörper auf, an dessen Oberseite zwei sich jeweils in Längsrichtung parallel erstreckende Spanneinrichtungen angeordnet sind. Diese Spanneinrichtungen sind in Querrichtung synchron zueinander und gegenläufig bewegbar und bestehen im wesentlichen jeweils aus einem in Längsrichtung sich erstreckenden Spanntisch und einem darüber angeordneten, sich ebenfalls in Längsrichtung erstrekkenden Spannbalken. Dabei kann jeder Spannbalken in eine Vielzahl von in Längsrichtung nebeneinander angeordneten, auf den zugehörigen Spanntisch absenkbaren Spannplatten aufgeteilt sein. Dem Spanntisch zugeordnet sind sich jeweils nach außen erstreckende Plattenauflagen, die der Abstützung der Kunststoffplatten in den Bereichen außerhalb der Spanneinrichtungen dienen.

Zwischen den beiden Spanneinrichtungen ist ein sich in Längsrichtung erstreckendes Heizschwert für die Erhitzung der miteinander zu verbindenden Stirnseiten der Kunststoffplatten angeordnet. Dieses Heizschwert läßt sich für das vor dem Erhitzen notwendige Ausrichten der Kanten der Kunststoffplatten aus dem Spalt herausfahren. Für das Ausrichten ist ein besonderer Anschlagbalken vorgesehen, der zwischen die Spanneinrichtungen bewegbar ist.

Mit solchen Schweißvorrichtungen können nicht nur zwei ebene Kunststoffplatten stirnseitig miteinander verbunden werden. Es besteht auch die Möglichkeit, aus einer Kunststoffplatte einen Rohrkörper zu formen. Hierzu wird die zunächst ebene Kunststoffplatte in eine erste Spanneinrichtung eingelegt. Dann wird sie von der Plattenauflage hoch und über die beiden Spanneinrichtungen hinweg auf die andere Seite umgebogen. Das Umbiegen wird so weit fortgesetzt, bis der freie Randbereich mit der dortigen Stirnseite in die zweite Spanneinrichtung eingeschoben und dort von dieser eingespannt wird. Die dann gegenüberliegenden Stirnseiten können mit Hilfe der Spanneinrichtungen nach ihrer Plastifizierung durch das Heizschwert gegeneinander verfahren und gepreßt werden. Nach der Verschweißung kann der fertige Rohrkörper nach Entfernung der Abstützungen der Spannbalken auf einer Seite in Längsrichtung herausgenommen werden.

Im Stand der Technik erfolgt das Verbiegen der Kunststoffplatte im wesentlichen von Hand. Wegen der dabei zu überwindenden Kräfte sind mehrere Personen erforderlich. Das Umbiegen ist mit hohem Zeitaufwand verbunden. Zudem ist die Gefahr des Zurückschnellens der Platte und damit die Unfallgefahr außerordentlich hoch. Eine motorisch angetriebene Biegeeinrichtung ist aus der EP-A-0 425 724 bekannt.

Der Erfindung liegt deshalb die Aufgabe zugrunde, eine Vorrichtung bereitzustellen, mit der sich das Biegen von Kunststoffplatten zu rohrförmigen Gebilden auf einfache und schnelle Weise ohne Unfallgefahr durchführen läßt.

Diese Aufgabe wird erfindungsgemäß dadurch gelöst, daß eine Biegeeinrichtung mit wenigstens einem Zugorgan vorgesehen ist, das zwischen einem ersten Spannpunkt über die Spanneinrichtungen hinweg zu einem zweiten Spannpunkt spannbar ist, wobei die Biegeeinrichtung eine Zugeinrichtung zur Aufprägung einer Spannkraft auf das Zugorgan aufweist.

Grundgedanke der Erfindung ist es demnach, ein oder mehrere Zugorgane über die Spanneinrichtungen hinwegzuspannen, und zwar derart, daß die Kunststoffplatte von der zweiten Stirnseite her durch Aufprägen einer Spannung auf das Zugorgan bzw. die Zugorgane nach oben und dann zur anderen Seite der Schweißvorrichtung herumgebogen wird. Es hat sich gezeigt, daß eine Kunststoffplatte zügig in eine Form gebracht werden kann, die das Einfädeln des der zweiten Stirnseite benachbarten Bereichs in die zweite Spanneinrichtung ermöglicht, sei es von Hand oder bei entsprechender Führung des Zugorgans durch dessen alleinige Einwirkung. Ein weiterer Vorzug besteht darin, daß das Umbiegen der Kunststoffplatte relativ sicher vor sich geht.

Erfindungsgemäß wird die an sich bekannte Schweiß- und Biegevorrichtung mit einer Zusatzeinrichtung in Form einer Biegeeinrichtung versehen, die ein Zugorgan oder mehrere, parallel angeordnete Zugorgane aufweist, wobei dem Zugorgan über eine Zugeinrichtung eine Spannkraft aufgeprägt werden kann, um eine in die erste Spanneinrichtung eingelegte Kunststoffplatte rundzubiegen. Als Zugorgan kommen insbesondere strangförmige Organe, wie beispielsweise Seile und Bänder in Frage. Sofern die Schweißeinrichtung relativ lang ist, empfiehlt es sich, über die Länge mehrere Zugorgane anzuordnen. Stattdessen können auch sehr breite Bänder, die schon Tuchgeometrie haben, verwendet werden. Wesentlich ist, daß eine Spannkraft aufgeprägt werden kann, die zwischen den Spannpunkten ein Rundbiegen der zunächst ebenen Kunststoffplatte bewirkt.

In Ausbildung der Erfindung ist vorgesehen, daß der erste Spannpunkt unterhalb der Spannebene angeordnet ist, so daß die Verspannung des Zugorgans um die zweite Stirnseite der Kunststoffplatte herum erfolgen kann. Alternativ oder in Kombination dazu kann jedoch auch vorgesehen sein, daß der erste Spannpunkt als Befestigungseinrichtung für die Verbindung des Zugorgans mit der Kunststoffplatte ausgebildet ist.

In weiterer Ausgestaltung der Erfindung ist vorgesehen, daß der zweite Spannpunkt an einer Verfahreinrichtung angeordnet ist, über die der zweite Spannpunkt von einer Position in einer oberhalb der Spanneinrichtungen liegenden Ebene in eine untere Endposition verfahrbar ist, wobei die untere Endposition vorzugsweise unter der Spannebene liegt. Schon allein durch diese Verfahrbarkeit kann mit Hilfe des Zugorgans derart auf die Kunststoffplatte eingewirkt werden, daß sie über die Spanneinrichtungen hinweg rundgebogen wird. Dabei kann die Verfahreinrichtung mit einem Verfahrschlitten versehen sein, über den der zweite Spannpunkt translatorisch zwischen dem oberen und unteren Endpunkt verfahren werden kann. Alternativ dazu oder zweckmäßigerweise in Kombination damit sollte die Verfahreinrichtung zwischen einer hochgestellten und einer heruntergeschwenkten Position verschwenkbar gelagert sein. Dabei sollte die heruntergeschwenkte Position horizontal liegend ausgerichtet sein. Bei entsprechender Anordnung der Schwenkachse läßt sich damit ein günstiger Bewegungsablauf für den zweiten Spannpunkt und damit eine entsprechend günstige Einwirkung auf die Kunststoffplatte in Biegerichtung erzielen.

Gemäß einem weiteren Merkmal der Erfindung ist vorgesehen, daß die Spanneinrichtung eine Verkürzungseinrichtung zur Verkürzung des Zugorganabschnitts zwischen den Spannpunkten aufweist, wobei die Verkürzungseinrichtung zweckmäßigerweise als Aufrolleinrichtung für das Zugorgan ausgebildet ist. Dabei empfiehlt es sich, das eine Ende des Zugorgans gerätefest an dem ersten Spannpunkt anzuordnen und das andere Ende über den zweiten Spannpunkt mit der Verkürzungseinrichtung zu verbinden. Der zweite Spannpunkt kann als Umlenkeinrichtung ausgebildet sein, über die das Zugorgan zu der ortsfest angeordneten Verkürzungseinrichtung geführt wird. Mit Hilfe der Verkürzungseinrichtung kann allein oder zweckmäßigerweise in Kombination mit der Verfahreinrichtung für den zweiten Spannpunkt eine optimale Einwirkung des Zugorgans auf die Kunststoffplatte erzielt werden, so daß der Biegevorgang problemlos durchgeführt werden kann. Es versteht sich, daß die Verfahreinrichtung und auch die Verkürzungseinrichtung motorisch angetrieben sind, damit sie von einem Steuerpult bedient werden können, das in an sich bekannter Weise vorteilhaft an einer der beiden Stirnseiten der Schweißvorrichtung und damit außerhalb des Biegebereichs angeordnet ist.

Nach der Erfindung ist desweiteren vorgesehen, daß auf der der ersten Spanneinrichtung abgewandten Seite der zweiten Spanneinrichtung Führungsflächen derart angeordnet und ausgebildet sind, daß die zweite Stirnseite der Kunststoffplatte beim Spannen des Zugorgans an ihnen zur Anlage kommt und auf diesen in Richtung auf die zweite Spanneinrichtung gelenkt wird. Diese Führungsflächen unterstützen das Rundbiegen der Kunststoffplatte insbesondere in der letzten Phase bis zum Einfädeln in die zweite Spanneinrichtung. Es versteht sich, daß die Führungsflächen mit einem möglichst reibungsarmen Belag versehen sind, damit die zweite Stirnseite problemlos an ihnen abgleiten kann.

Sofern eine Verfahreinrichtung für den zweiten Spannpunkt vorgesehen ist, bietet es sich an, die Führungsflächen an dieser Verfahreinrichtung anzuordnen. Alternativ oder in Kombination dazu können Führungsflächen auch gerätefest in Höhe der zweiten Spanneinrichtung angeordnet sein, um die Endphase des Biegevorgangs bis zum Einfädeln in die zweite Spanneinrichtung präzise zu führen.

Der Biegevorgang kann desweiteren günstig beeinflußt werden, wenn eine Druckeinrichtung zur Druckbeaufschlagung der Außenseite der Kunststoffplatte zwecks Unterstützung oder Beendigung des Biegevorgangs vorgesehen ist. Die Druckeinrichtung kann beispielsweise zur Aufprägung eines Druckes von oben ausgebildet sein. Es kann vorgesehen sein, daß die Druckeinrichtung auf der der zweiten Spanneinrichtung abgewandten Seite der ersten Spanneinrichtung angeordnet ist und mit wenigstens einem nach oben und in Richtung auf die Spanneinrichtungen wirkenden Druckelement versehen ist. Das Drückelement kann beispielsweise als Schwenkelement ausgebildet sein, welches aus einer Position unterhalb oder in der Spannebene um eine Horizontalachse nach oben in Richtung auf die Spanneinrichtungen verschwenkbar ist. Es versteht sich, daß statt eines Schwenkelements auch mehrere Schwenkelemente über die Länge der Schweißvorrichtung verteilt angeordnet sein können, die synchron bewegt werden. Auch das Drückelement ist vorzugsweise motorisch angetrieben, beispielsweise hydraulisch, pneumatisch oder elektrisch, so daß der Einsatz des Drückelements entsprechend dem erfindungsgemäßen Verfahren von einem Steuerpult aus geschehen kann, das an einer der Stirnseiten der Schweißvorrichtung angeordnet ist.

In der Zeichnung ist die Erfindung anhand eines Ausführungsbeispiels näher veranschaulicht. Es zeigen:
- Figur 1: die Stirnseite einer Schweißvorrichtung mit der erfindungsgemäßen Biegeeinrichtung zu Beginn des Biegevorgangs mit noch ebener Kunststoffplatte;
- Figur 2: die Schweißvorrichtung gemäß Figur 1 in gleicher Ansicht mit schon hochgebogenem Endbereich der Kunststoffplatte;
- Figur 3: die Schweißvorrichtung gemäß den Figuren 1 und 2 in gleicher Ansicht mit über die Spanneinrichtungen gebogener Kunststoffplatte;
- Figur 4: die Schweißvorrichtung gemäß den Figuren 1 bis 3 in der gleichen Ansicht mit endseitig heruntergebogener Kunststoffplatte;
- Figur 5: die Schweißvorrichtung gemäß den Figuren 1 bis 4 in der gleichen Ansicht mit nahezu rundgebogener Kunststoffplatte und
- Figur 6: die Schweißvorrichtung gemäß den Figuren 1 bis 5 in der gleichen Ansicht mit verdrückter und mit der zweiten Stirnseite in die zweite Spanneinrichtung eingefädelter Kunststoffplatte.

Die in den Figuren dargestellte Schweißvorrichtung 1 besteht im wesentlichen aus einem Schweißapparat 2, wie er beispielsweise aus der DE-A-35 39 842 oder EP-A-0 595 213 bekannt ist, sowie aus einer Biegeeinrichtung 3, die beidseits an den Schweißapparat 2 angebaut ist. Der Schweißapparat 2 hat einen verkleideten Grundkörper 4 mit einer vorderen Stirnseite 5 und zwei parallelen, senkrechten Längsseiten 6, 7. Der Grundkörper 4 ist senkrecht zur Zeichnungsebene langgestreckt.

Auf der Oberseite des Grundkörpers 4 befinden sich zwei sich ebenfalls in Längsrichtung, d. h. senkrecht zur Zeichnungsebene erstreckende Spanneinrichtungen 9, 10. Jede Spanneinrichtung 9, 10 weist untenseitig einen Spanntisch 11, 12 auf, welche nicht miteinander verbunden sind. Die Spanntische 11, 12 definieren eine Spannebene. Oberhalb jedes Spanntischs 11, 12 erstrecken sich Spannbalken 13, 14, welche über ihre Länge verteilt, also senkrecht zur Zeichnungsebene, eine Vielzahl von pneumatisch betriebenen Teleskopzylindern aufweisen, an denen jeweils eine Spannplatte 15, 16 angeordnet sind. Über die Teleskopzylinder können die in der Zeichnung angehoben dargestellten Spannplatten 15, 16 nach unten abgesenkt werden, um beispielsweise eine Kunststoffplatte zwischen ihnen und dem jeweiligen Spanntisch 11, 12 einzuspannen. Die Spanneinrichtungen 9, 10 sind jeweils als ganzes mit Hilfe einer im Grundkörper 4 angeordneten Antriebs in der Zeichnungsebene horizontal bewegbar, und zwar synchron gegenläufig. In der gezeigten Stellung befinden sich die Spanneinrichtungen 9, 10 in der einander angenäherten Stellung.

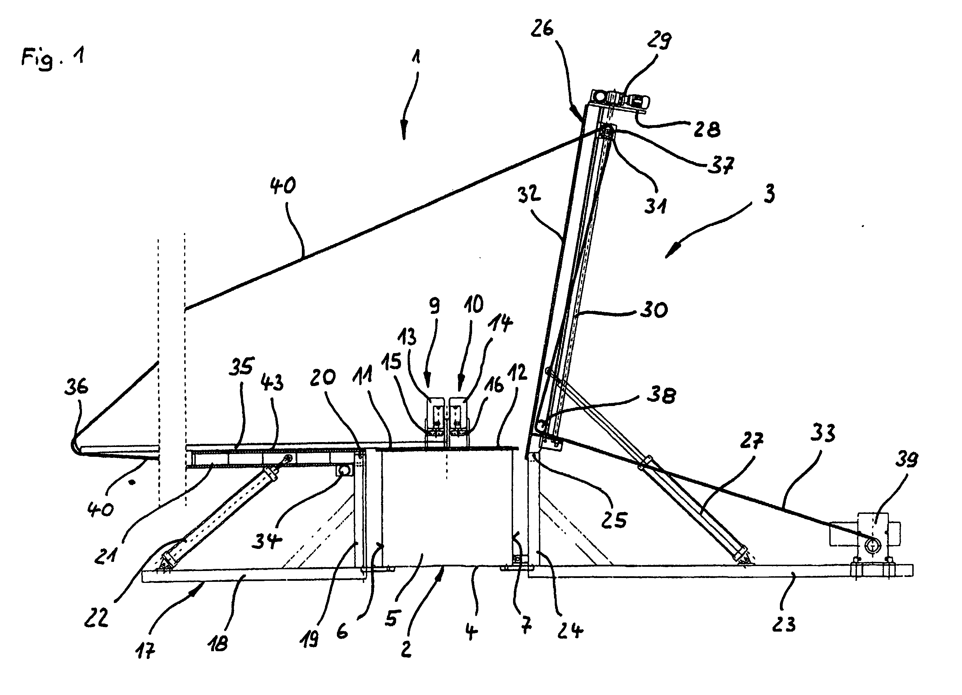

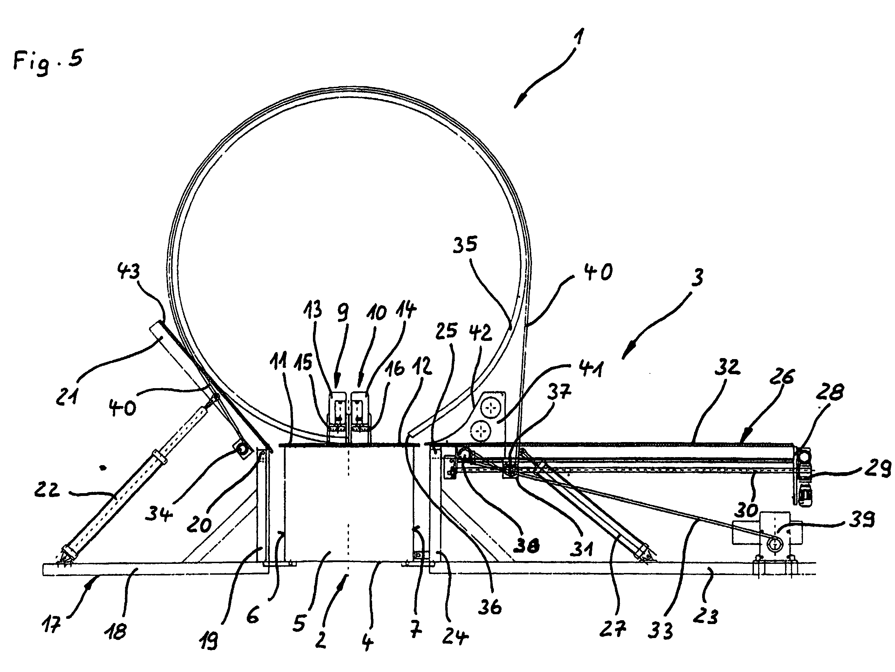

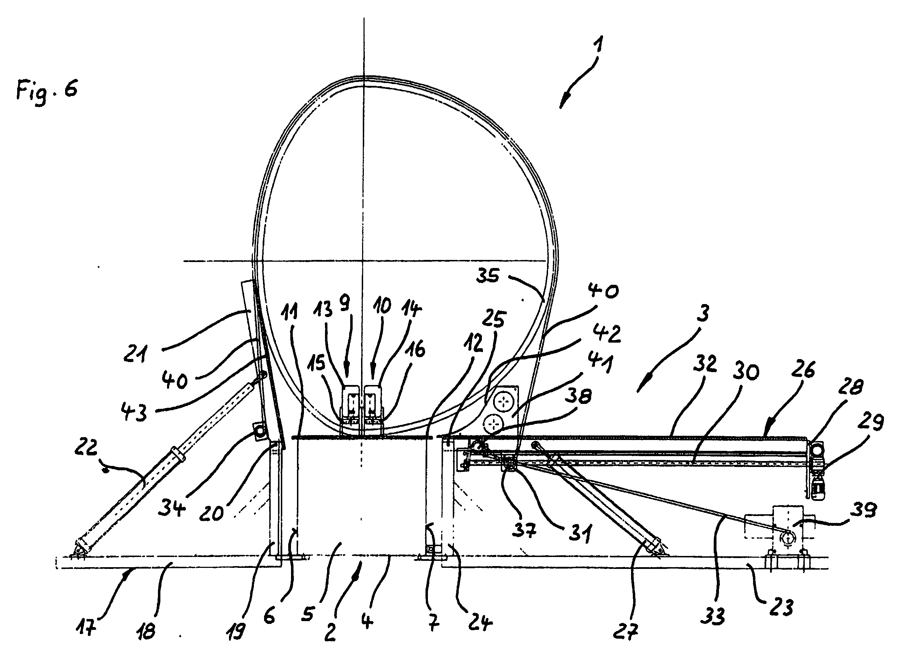

Auf der in dieser Ansicht linken Seite der Schweißvorrichtung 1 ist ein erster Teil der Biegeeinrichtung 3 angebracht. Er stellt einen Auflagetisch 17 mit einem Horizontalrahmen 18 und mit diesem verstrebten Vertikalstützen 19 dar. Dabei sind senkrecht zur Zeichnungsebene mehrere Vertikalstützen 19 vorgesehen. An den Vertikalstützen 19 sind über eine Schwenkachse 20 hintereinander - d. h. senkrecht zur Zeichnungsebene - mehrere Schwenkbalken 21 angebracht, welche sich über pneumatisch betätigbare Kolbenzylindereinheiten 22 aus einer horizontalen Stellung (Figuren 1 bis 4) in eine hochgeschwenkte Stellung (Figuren 5 und 6) verschwenken lassen. Die Oberseiten der Schwenkbalken 21 liegen in horizontaler Stellung auf gleicher Höhe wie die der Spanntische 11, 12.

Auf der in dieser Ansicht rechten Seite des Spannapparats 2 ist der zweite Teil der Biegeeinrichtung 3 angeordnet. Auch er hat einen Horizontalrahmen 19, an dessen dem Schweißapparat 2 benachbarten Ende wenigstens eine Vertikalstrebe 24 bis etwa in Höhe des benachbarten Spanntischs 12 hochsteht. Am oberen Ende ist eine Schwenkachse 25 angebracht, auf der ein Schwenkmast 26 sitzt. Der Schwenkmast 26 ist als gerades Profil ausgebildet, der sich an dem Horizontalrahmen 32 über eine pneumatisch betätigbare Kolbenzylindereinheit 27 abstützt und über diese Kolbenzylindereinheit 27 aus einer horizontalen Stellung (Figuren 5 und 6) in eine nahezu vertikale Stellung (Figuren 1 bis 4) - und zurück - verschwenkt werden kann.

Am freien Ende hat der Schwenkmast 26 eine Kopfplatte 28, auf der ein elektrischer Getriebemotor 29 angeordnet ist. Der Getriebemotor 29 treibt eine Spindel 30 an, welche sich auf der den Spanneinrichtungen 9, 10 abgewandten Seite des Schwenkmasts 26 über nahezu dessen gesamte Länge erstreckt. Auf der Spindel 30 sitzt ein Schlitten 31, welcher gleitend an dem Schwenkmast 26 geführt und durch Drehen der Spindel 30 längs des Schwenkmasts 26 verfahren werden kann. Auf der den Spanneinrichtungen 9, 10 zugewandten Seite hat der Schwenkmast 26 eine Gleitauflage 32 aus Polypropylen. Sie erstreckt sich über die gesamte Länge des Schwenkmasts 26. In horizontaler Stellung des Schwenkmasts 26 liegt ihre Oberfläche auf gleicher Höhe wie die der Spanntische 11, 12 (vgl. Figuren 5 und 6).

Zur Biegeeinrichtung 3 gehört ein Spannseil 33, dessen eines Ende an der Unterseite des Schwenkbalkens 21 nahe der Schwenkachse 20 an einer Halteeinrichtung 34 eingehängt ist. Das Spannseil 33 verläuft zu Beginn eines Biegevorgangs (Figur 1) nach außen entlang der Unterseite einer Kunststoffplatte 35, die auf dem linksseitigen Spanntisch 11 und den Schwenkbalken 21 aufliegt. Innerhalb der Spanneinrichtung 9 ist ein hier nicht näher dargestellter Anschlag vorhanden, an dem die rechtsseitige Stirnseite der Kunststoffplatte 35 anliegt und abgestützt wird. Das Spannseil 33 verläuft dann weiter um die freie Stirnseite 36 der Kunststoffplatte 35 herum und schräg nach oben über die Spanneinrichtungen 9, 10 hinweg zu einer Umlenkrolle 37, die frei drehbar auf dem Schlitten 31 sitzt. Von dort geht das Spannseil 33 längs des Schwenkmasts 26 nach unten zu einer weiteren Umlenkrolle 38, die nahe der Schwenkachse 25 des Schwenkmasts 26 frei drehbar aufgehängt ist. Von dort geht das Spannseil 33 zu einer elektromotorisch angetriebenen Aufrolleinrichtung 39, die an dem außenliegenden Ende des Horizontalrahmens 23 befestigt ist.

Die senkrechten, strichpunktierten Linien auf der jeweils linken Seite der Figuren 1 bis 4 sollen symbolisieren, daß die Erstreckung der Kunststoffplatte 35 und damit der Verlauf des Spannseils 33 verkürzt wiedergegeben sind. Die Kunststoffplatte 35 steht in Wirklichkeit mit einer wesentlich größeren Erstrekkung über die Schwenkbalken 21 nach außen vor.

In Figur 1 befinden sich die Schwenkbalken 21 in einer horizontalen Stellung. Die Kunststoffplatte 35 ist noch eben. Das Spannseil 33 ist über die Aufrolleinrichtung 39 gerade so gespannt, daß es stramm ist, also in dem Bereich zwischen Stirnseite 36 der Kunststoffplatte 35 und Umlenkrolle 37 nicht wesentlich durchhängt. Der Schwenkmast 26 befindet sich in der hochgeschwenkten Endstellung. Der Schlitten 31 mit der Umlenkrolle 37 nimmt seine obere Endposition am Schwenkmast 26 ein.

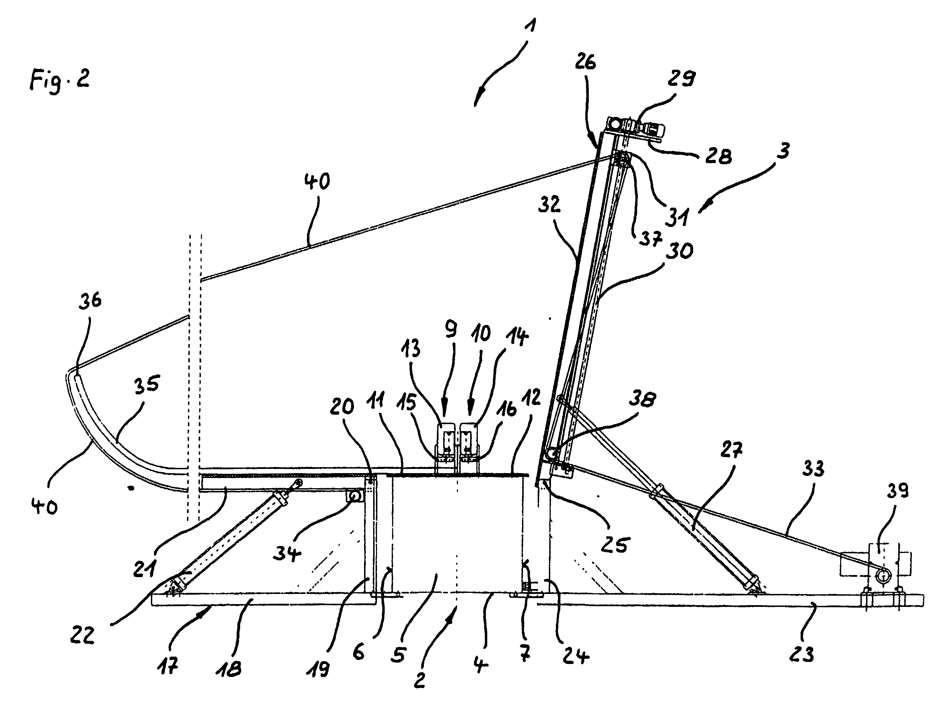

Eine Bedienungsperson kann nun mit Hilfe eines hier nicht dargestellten, vorzugsweise an der Stirnseite 5 des Schweißapparats 2 angebrachten Steuerpults den Biegevorgang steuern. Hierzu wird zunächst die Aufrolleinrichtung 39 derart in Betrieb genommen, daß das Spannseil 33 aufgerollt wird. Hierdurch verkürzt sich die Länge des Spannseilabschnitts 40 zwischen der Halteeinrichtung 34 und der Umlenkrolle 37, was zur Folge hat, daß der außenliegende, freie Endbereich der Kunststoffplatte 35 hochgebogen wird. Dies läßt sich aus Figur 2 ersehen.

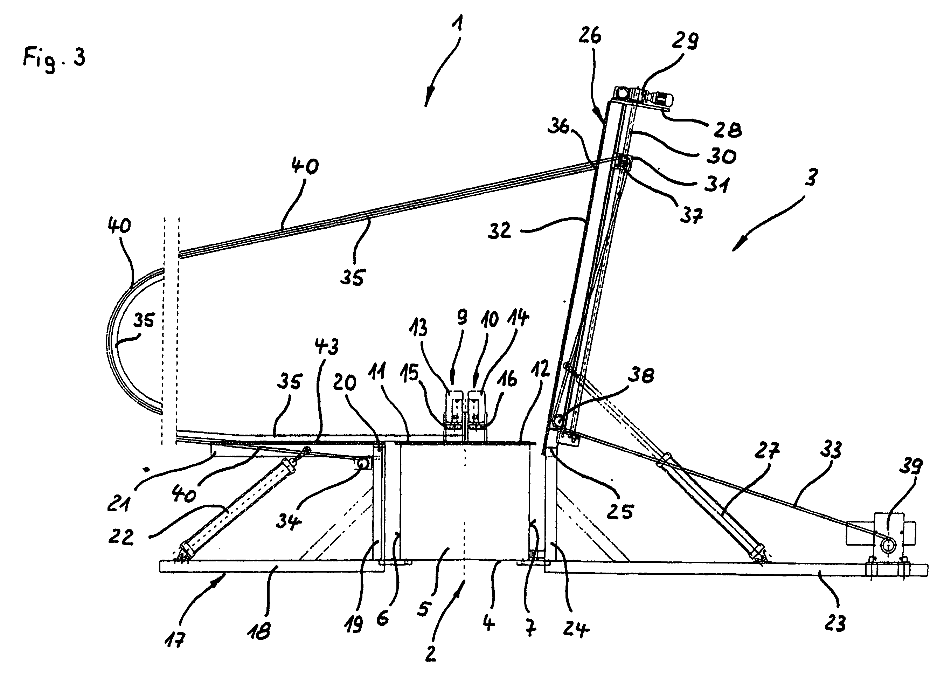

Im weiteren Verlauf wird die Kunststoffplatte 35 immer weiter umgebogen, wobei sie aufgrund ihrer Vorspannung an der Innenseite des Spannseils 33 anliegt. Das Aufrollen des Spannseils 33 führt schließlich dazu, daß die freie Stirnseite 36 der Kunststoffplatte 35 in Anlage an der Gleitauflage 32 kommt. Dies ist in Figur 3 erkennbar. Dabei ist hier schon der Schlitten 31 durch entsprechende Verdrehung der Spindel 30 mit Hilfe des Getriebemotors 29 nach unten verschoben worden, so daß die Stirnseite 36 der Kunststoffplatte 35 auf der Gleitauflage 32 entsprechend nach unten geglitten ist.

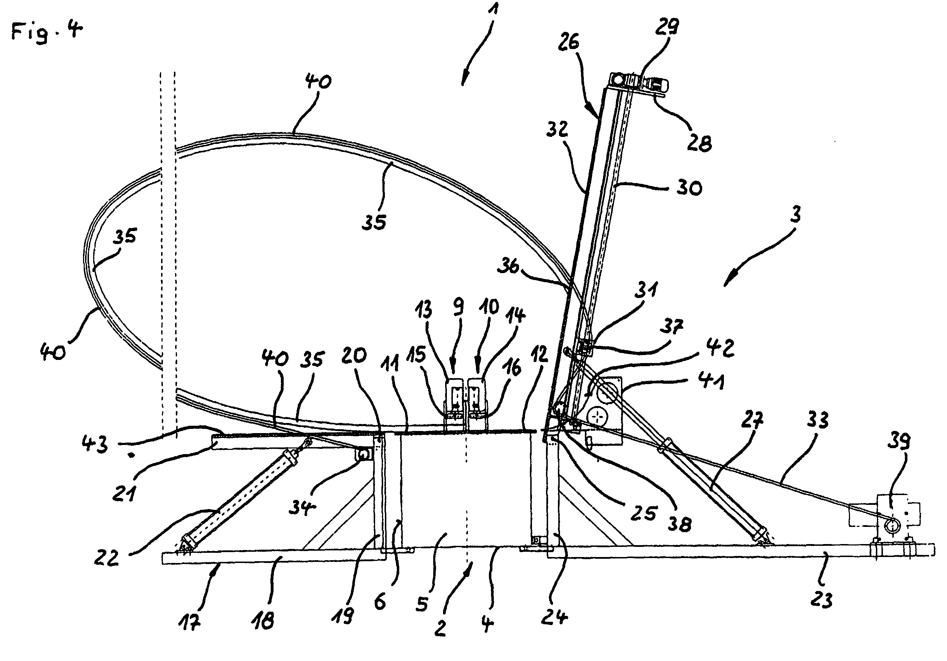

Figur 4 zeigt die weitere Entwicklung des Biegevorgangs. Durch Abwärtsbewegung des Schlittens 31 mit der Umlenkrolle 37 und Aufrollen des Spannseils 33 gleitet die Stirnseite 36 der Kunststoffplatte 35 an der Gleitauflage 32 nach unten, wodurch die Kunststoffplatte 35 zunehmend eine Schlaufen- bzw. Eiform annimmt. In den Figuren 4 bis 6 ist zusätzlich ein Führungsblech 41 im Bereich der Schwenkachse 25 des Schwenkmasts 26 eingezeichnet, das eine ebenfalls mit Polypropylen belegte Gleitkurve 42 aufweist, die tangential in Richtung auf den Spanntisch 12 ausläuft. An dieser Gleitkurve 42 kommt die Stirnseite 36 der Kunststoffplatte 35 zur Anlage, wenn der Schlitten 31 seine untere Endposition erreicht hat und dann der Schwenkmast 26 in die Horizontale verschwenkt wird, wie dies aus Figur 5 zu ersehen ist. Die Gleitkurve 42 übernimmt dann die weitere Führung.

Während des oder kurz nach dem Herabschwenken des Schwenkmasts 26 aufgrund der entsprechenden Ansteuerung Kolbenzylindereinheit 27 wird die Kolbenzylindereinheit 22 dergestalt aktiviert, daß die Schwenkbalken 21 hochgeschwenkt werden, wie sich ebenfalls aus Figur 5 ersehen läßt. Auf diese Weise nimmt die Kunststoffplatte 35 eine mehr runde Form ein, und der freie Endbereich mit der Stirnseite 36 wird - unterstützt durch das Führungsblech 41 - in Richtung auf die zweite Spanneinrichtung 10 bewegt. Dabei dauert der Aufrollvorgang für das Spannseil 33 an.

Wie Figur 6 zeigt, wird das Hochschwenken der Schwenkbalken 21 bis in die nahezu senkrechte Stellung fortgesetzt. Dies bewirkt eine Verformung der Kunststoffplatte 35 und eine Verschiebung des Mittelpunkts der von der Kunststoffplatte 35 eingeschlossenen Querschnittsfläche nach rechts über den Mittelpunkt des Schweißapparats 2 hinaus und begünstigt auf diese Weise das Einfädeln der Stirnseite 36 und des dazu benachbarten Bereichs der Kunststoffplatte 35 in die zweite Spanneinrichtung 10. Dabei sorgt eine Gleitauflage 43 auf der Oberseite der Schwenkbalken 21 für eine Reibungsminimierung. Figur 6 zeigt, daß sich die beiden Stirnseiten 36 der Kunststoffplatte 35 nunmehr mittig zum Schwe.ißapparat 2 gegenüberstehen.

Jetzt können die Spanneinrichtungen 9, 10 betätigt werden, so daß die Endbereiche der Kunststoffplatte 35 in der in Figur 6 gezeigten Position zwischen den Spannplatten 15, 16 und den Spanntischen 11, 12 eingeklemmt werden. Die Schwenkbalken 21 werden wieder in ihre horizontale Stellung zurückgeschwenkt, und das Spannseil 33 wird durch Abrollen von der Aufrolleinrichtung 39 entspannt. Die Kunststoffplatte 35 nimmt dann eine zu den Spanneinrichtungen 9, 10 symmetrische Form an.

Der sich anschließende Schweißvorgang wird analog wie bei zwei miteinander zu verschweißenden Platten durchgeführt. Die Spanneinrichtungen 9, 10 werden mit den festgeklemmten Enden der Kunststoffplatte 35 horizontal auseinandergefahren. Dann wird ein hier nicht näher dargestelltes Heizschwert in den Spalt zwischen den Stirnseiten 36 der Kunststoffplatte 35 eingefahren, und es werden die Stirnseiten 35 gegen das Heizschwert durch entsprechendes, gegenläufiges Verfahren der Spanneinrichtungen 9, 10 aufeinander zu an dem Heizschwert zur Anlage gebracht. Nach Plastifizieren der Stirnseiten 36 werden die Spanneinrichtungen 9, 10 wieder etwas auseinandergefahren, so daß das Heizschwert durch Absenken in den Grundkörper 4 eingefahren werden kann. Anschließend werden die plastifizierten Stirnseiten durch Zusammenfahren der Spanneinrichtungen 9, 10 zur gegenseitigen Anlage unter Einwirkung eines vorbestimmten Drucks gebracht, wodurch die Stirnseiten 36 miteinander verschweißen.

Nach dem Schweißvorgang werden die Halterungen der Spannbalken 13, 14 auf einer Seite entfernt, so daß der aus der Kunststoffplatte 35 gebildete Rohrkörper zu dieser Seite hin aus dem Schweißapparat 2 horizontal (senkrecht zur Zeichnungsebene) herausgezogen werden kann.

## Patentansprüche

1. Schweiß- und Biegevorrichtung (1) zur Herstellung von Rohrkörpern aus Kunststoffplatten (35), mit zwei benachbarten, eine Spannebene definierenden Spanneinrichtungen (9, 10) zum Fixieren einer rundgebogenen Kunststoffplatte in Bereichen, die den zu verschweißenden Stirnseiten (36) benachbart sind, sowie mit einer Schweißeinrichtung und einer Biegeeinrichtung,
dadurch gekennzeichnet, daß die Biegeeinrichtung (3) mit wenigstens einem Zugorgan (33) vorgesehen ist, das zwischen einem ersten Spannpunkt (34) über die Spanneinrichtungen (9, 10) hinweg zu einem zweiten Spannpunkt (37) spannbar ist, wobei die Biegeeinrichtung eine Zugeinrichtung (39) zur Aufprägung einer Spannkraft auf das Zugorgan (33) aufweist.

2. Schweiß- und Biegevorrichtung nach Anspruch 1,
dadurch gekennzeichnet, daß der erste Spannpunkt (34) unter halb der Spannebene angeordnet ist.

3. Schweiß- und Biegevorrichtung nach Anspruch 1 oder 2,
dadurch gekennzeichnet, daß der erste Spannpunkt als Befestigungseinrichtung für die Verbindung des Zugorgans mit der Kunststoffplatte ausgebildet ist.

4. Schweiß- und Biegevorrichtung nach einem der Ansprüche 1 bis 3,
dadurch gekennzeichnet, daß der zweite Spannpunkt (37) an einer Verfahreinrichtung (26, 31) angeordnet ist, über die der zweite Spannpunkt (37) von einer Position in eine oberhalb der Spanneinrichtung (9, 10) liegenden Ebene in eine untere Position verfahrbar ist.

5. Schweiß- und Biegevorrichtung nach Anspruch 4,
dadurch gekennzeichnet, daß die Verfahreinrichtung (26, 31) derart ausgebildet ist, daß die untere Endposition unterhalb der Spannebene liegt.

6. Schweiß- und Biegevorrichtung nach Anspruch 4 oder 5,
dadurch gekennzeichnet, daß die Verfahreinrichtung (25) mit einem Verfahrschlitten (31) versehen ist, über die der zweite Spannpunkt (37) translatorisch verfahrbar ist.

7. Schweiß- und Biegevorrichtung nach einem der Ansprüche 4 bis 6,
dadurch gekennzeichnet, daß die Verfahreinrichtung (26, 31) zwischen einer hochgestellten und einer heruntergeschwenkten Position verschwenkbar gelagert ist.

8. Schweiß- und Biegevorrichtung nach Anspruch 7,
dadurch gekennzeichnet, daß die heruntergeschwenkte Position horizontal liegend ausgerichtet ist.

9. Schweiß- und Biegevorrichtung nach einem der Ansprüche 1 bis 8,
dadurch gekennzeichnet, daß die Biegeeinrichtung (3) eine Verkürzungseinrichtung (39) zur Verkürzung des Zugorganabschnitts (40) zwischen den Spannpunkten (34, 37) aufweist.

10. Schweiß- und Biegevorrichtung nach Anspruch 9,
dadurch gekennzeichnet, daß die Verkürzungseinrichtung als Aufrolleinrichtung (39) ausgebildet ist.

11. Schweiß- und Biegevorrichtung nach Anspruch 9 oder 10,
dadurch gekennzeichnet, daß das eine Ende des Zugorgans (33) gerätefest an dem ersten Spannpunkt (34) und das andere Ende über den zweiten Spannpunkt (37) mit der Verkürzungseinrichtung (39) verbunden ist.

12. Schweiß- und Biegevorrichtung nach einem der Ansprüche 9 bis 11,
dadurch gekennzeichnet, daß der zweite Spannpunkt (37) als Umlenkeinrichtung ausgebildet ist, über die das Zugorgan (33) an der ortsfest angeordneten Verkürzungseinrichtung (39) geführt ist.

13. Schweiß- und Biegevorrichtung nach einem der Ansprüche 1 bis 12,
dadurch gekennzeichnet, daß auf der der ersten Spanneinrichtung (9) abgewandten Seite der zweiten Spanneinrichtung (10) Führungsflächen (32, 42) derart angeordnet und ausgebildet sind, daß die zweite Stirnseite (36) der Kunststoffplatte (35) beim Spannen des Zugorgans (33) an ihnen zur Anlage kommt und auf diesen in Richtung auf die zweite Spanneinrichtung geführt wird.

14. Schweiß- und Biegevorrichtung nach Anspruch 13
dadurch gekennzeichnet, daß die Führungsflächen (32) zumindest teilweise an der Verfahreinrichtung (26, 31) für den zweiten Spannpunkt (37) angeordnet sind.

15. Schweiß- und Biegevorrichtung nach Anspruch 13 oder 14,
dadurch gekennzeichnet, daß die Führungsflächen (41, 42) gerätefest in Höhe der zweiten Spanneinrichtung (10) angeordnet sind.

16. Schweiß- und Biegevorrichtung nach einem der Ansprüche 1 bis 15,
dadurch gekennzeichnet, daß eine Drückeinrichtung (19, 20, 21) zur Druckbeaufschlagung der Außenseite der Kunststoffplatte (35) zwecks Unterstützung oder Beendigung des Biegevorgangs vorgesehen ist.

17. Schweiß- und Biegevorrichtung nach Anspruch 16,
dadurch gekennzeichnet, daß die Drückeinrichtung (19, 20, 21) auf der der zweiten Spanneinrichtung (10) abgewandten Seite der ersten Spanneinrichtung angeordnet ist und mit wenigstens einem nach oben und in Richtung auf die Spanneinrichtungen (9, 10) wirkenden Drückelement (21) versehen ist.

18. Schweiß- und Biegevorrichtung nach Anspruch 17,
dadurch gekennzeichnet, daß das Drückelement (21) als Schwenkelement ausgebildet ist, welches aus einer Position unterhalb der Spannebene um eine Horizontalachse (20) nach oben in Richtung auf die Spanneinrichtungen (9, 10) verschwenkbar ist.

## Claims

1. A welding and bending apparatus (1) for manufacturing tubular bodies from plastics sheets (35), comprising two adjacent clamping devices (9, 10) which define a clamping plane for fixing a plastics sheet, which is bent to form a round, in regions which are adjacent to the end faces (36) to be welded, and comprising a welding device and a bending device,
characterised in that the bending device (3) is provided with at least one tension member (33) which can be tensioned above the clamping devices (9, 10) between a first tensioning point (34) and a second tensioning point (37), wherein the bending device comprises a tension device (39) for exerting a tensile force on the tension member (33).

2. A welding and bending apparatus according to claim 1,
characterised in that the first tensioning point (34) is disposed below the clamping plane.

3. A welding and bending apparatus according to claims 1 or 2,
characterised in that the first tensioning point is formed as a fixing device for connecting the tension member to the plastics sheet.

4. A welding and bending apparatus according to any one of claims I to 3,
characterised in that the second tensioning point (37) is disposed on a displacement device (26, 31) via which the second tensioning point (37) can be moved from a position in a plane situated above the clamping device (9, 10) into a lower position.

5. A welding and bending apparatus according to claim 4,
characterised in that the displacement device (26, 31) is constructed so that its lower end position is situated below the clamping plane.

6. A welding and bending apparatus according to claims 4 or 5,
characterised in that the displacement device (25) is provided with a travelling slide (31) via which the second tensioning point (37) can be moved in translation.

7. A welding and bending apparatus according to any one of claims 4 to 6,
characterised in that the displacement device (26, 31) is mounted so that it can swivel between a raised and a swivelled-down position.

8. A welding and bending apparatus according to claim 7,
characterised in that the swivelled-down position is aligned horizontally.

9. A welding and bending apparatus according to any one of claims 1 to 8,
characterised in that the bending device (3) comprises a shortening device (39) for shortening the tension member section (40) between the tensioning points (34, 37).

10. A welding and bending apparatus according to claim 9,
characterised in that the shortening device is constructed as a rolling-up device (39).

11. A welding and bending apparatus according to claims 9 or 10,
characterised in that one end of the tension member (33) is fixedly attached to the apparatus at the first tensioning point (34) and the other end is attached to the shortening device (39) via the second tensioning point (37).

12. A welding and bending apparatus according to any one of claims 9 to 11,
characterised in that the second tensioning point (37) is constructed as a deflection device via which the tension member (33) is guided on to the fixedly disposed shortening device (39).

13. A welding and bending apparatus according to any one of claims 1 to 12,
characterised in that guide faces (32, 42) are disposed and formed on the side of the second clamping device (10) facing away from the first clamping device (9) in such a way that when the tension member (33) is tensioned the second end face (36) of the plastics sheet (35) comes into contact with said guide faces and is guided thereon towards the second clamping device.

14. A welding and bending apparatus according to claim 13,
characterised in that the guide faces (32) are disposed at least in part on the displacement device (26, 31) for the second tensioning point (37).

15. A welding and bending apparatus according to claims 13 or 14,
characterised in that the guide faces (41, 42) are fixedly attached to the apparatus at the height of the second clamping device (10).

16. A welding and bending apparatus according to any one of claims 1 to 15,
characterised in that the a pressure device (19, 20, 21) is provided for applying pressure to the outside of the plastics sheet (35) for the purpose of assisting or completing the bending operation.

17. A welding and bending apparatus according to claim 16,
characterised in that the pressure device (19, 20, 21) is disposed on the side of the first clamping device facing away from the second clamping device (10) and is provided with at least one pressure element (21) which acts upwards in the direction of the clamping devices (9, 10).

18. A welding and bending apparatus according to claim 17,
characterised in that the pressure element (21) is constructed as a swivelling element which can swivel upwards about a horizontal axis (20) towards the clamping devices (9, 10) from a position below the clamping plane.

## Revendications

1. Appareil de soudage et de cintrage pour fabriquer des corps tubulaires à partir de plaques en matière plastique (35), comprenant deux dispositifs de fixation (9, 10) adjacents définissant un plan de fixation pour fixer une plaque en matière plastique courbée qui est voisine des faces frontales (36) à souder, comprenant également un dispositif de soudage et de cintrage, caractérisé en ce que le dispositif de cintrage (3) est muni d'au moins un organe de traction (33) pouvant être immobilisé entre un premier point de fixation (34) et un deuxième point de fixation (37), en passant par-dessus les dispositifs de fixation (9, 10), sachant que le dispositif de cintrage présente un dispositif de traction (39) pour appliquer une force de serrage sur l'organe de traction (33).

2. Appareil de soudage et de cintrage selon la revendication 1, caractérisé en ce que le premier point de fixation (34) se situe au-dessous du plan de fixation.

3. Appareil de soudage et de cintrage selon la revendication 1 ou 2, caractérisé en ce que le premier point de fixation est réalisé en tant que dispositif de fixation pour relier l'organe de traction à la plaque en matière plastique.

4. Dispositif de soudage et de cintrage selon l'une des revendications 1 à 3, caractérisé en ce que le deuxième point de fixation (37) est disposé sur un dispositif de déplacement (26, 31) par l'intermédiaire duquel le deuxième point de fixation (37) peut être déplacé d'une position dans laquelle il est situé dans un plan au-dessus du dispositif de fixation (9, 10) à une position basse.

5. Appareil de soudage et de cintrage selon la revendication 4, caractérisé en ce que le dispositif de déplacement (26, 31) est réalisé de telle manière que la position finale basse se situe au-dessous du plan de fixation.

6. Appareil de soudage et de cintrage selon la revendication 4 ou 5, caractérisé en ce que le dispositif de déplacement (25) est muni d'un chariot de déplacement (31) permettant de translater le deuxième point de fixation (37).

7. Appareil de soudage et de cintrage selon l'une des revendications 4 à 6, caractérisé en ce que le dispositif de déplacement (26, 31) est monté de manière à pouvoir pivoter entre une position haute et une position basse.

8. Appareil de soudage et de cintrage selon la revendication 7, caractérisé en ce que la position basse est orientée horizontalement.

9. Appareil de soudage et de cintrage selon l'une des revendications 1 à 8, caractérisé en ce que le dispositif de cintrage (3) présente un dispositif de raccourcissement (39) pour raccourcir le segment de l'organe de traction (40) entre les points de fixation (34, 37).

10. Appareil de soudage et de cintrage selon la revendication 9, caractérisé en ce que le dispositif de raccourcissement est réalisé en tant qu'enrouleur (39).

11. Appareil de soudage et de cintrage selon la revendication 9 ou 10, caractérisé en ce que l'une des extrémités de l'organe de traction (33) est immobilisée sur l'appareil au niveau du premier point de fixation (34) et l'autre extrémité est reliée au dispositif de raccourcissement (39) par l'intermédiaire du deuxième point de fixation (37).

12. Appareil de soudage et de cintrage selon l'une des revendications 9 à 11, caractérisé en ce que le deuxième point de fixation (37) est réalisé en tant que poulie de renvoi sur laquelle passe l'organe de traction à hauteur du dispositif de raccourcissement (39) disposé de façon stationnaire.

13. Appareil de soudage et de cintrage selon l'une des revendications 1 à 12, caractérisé en ce que des surfaces de guidage (32, 42) sont réalisées et disposées sur le côté du deuxième dispositif de serrage (10) qui est opposé au premier dispositif de serrage (9) de manière à ce que, lors de la fixation de l'organe de traction (33), le deuxième côté frontal (36) de la plaque en matière plastique (35) vienne s'appliquer contre cet organe de traction et soit guidé sur celui-ci vers le deuxième dispositif de fixation.

14. Appareil de soudage et de cintrage selon la revendication 13, caractérisé en ce que les surfaces de guidage (32) sont au moins en partie disposées sur le dispositif de déplacement (26, 31) pour le deuxième point de fixation (37).

15. Appareil de soudage et de cintrage selon la revendication 13 ou 14, caractérisé en ce que les surfaces de guidage (41, 42) sont situées fixement sur l'appareil, au niveau du deuxième dispositif de fixation (10).

16. Appareil de soudage et de cintrage selon l'une des revendications 1 à 15, caractérisé en ce qu'est prévu un poussoir (19, 20, 21) pour appuyer sur la face extérieure de la plaque en matière plastique (35), dans le but de favoriser ou d'achever l'opération de cintrage.

17. Appareil de soudage et de cintrage selon la revendication 16, caractérisé en ce que le poussoir (19, 20, 21) est situé sur le côté du premier dispositif de fixation qui est opposé au deuxième dispositif de fixation (10) et est muni d'au moins un élément pousseur (21) agissant vers le haut et vers les dispositifs de fixation (9, 10).

18. Appareil de soudage et de cintrage selon la revendication 17, caractérisé en ce que l'élément pousseur (21) est réalisé en tant qu'élément pivotant pouvant pivoter autour d'un axe horizontal (20) vers le haut, en direction des dispositifs de fixation (9, 10), à partir d'une position dans laquelle il est situé au-dessous du plan de fixation.
